(19)

Europäisches Patentamt

European Patent Office

Office européen des brevets

(11) **EP 2 370 785 B1**

(12) **EUROPEAN PATENT SPECIFICATION**

(45) Date of publication and mention
of the grant of the patent:
**03.05.2017 Bulletin 2017/18**

(21) Application number: **08876395.8**

(22) Date of filing: **31.12.2008**

(51) Int Cl.:
*G01C 21/32* *(2006.01)*    *G09B 29/00* *(2006.01)*

(86) International application number:
**PCT/US2008/014124**

(87) International publication number:
**WO 2010/077229 (08.07.2010 Gazette 2010/27)**

(54) **SYSTEMS AND METHODS FOR PROCESSING INFORMATION RELATED TO A GEOGRAPHIC REGION**

SYSTEME UND VERFAHREN ZUM VERARBEITEN VON INFORMATIONEN IN BEZUG AUF EINE GEOGRAFISCHE REGION

SYSTÈMES ET PROCÉDÉS DESTINÉS À TRAITER DES INFORMATIONS RELATIVES À UNE RÉGION GÉOGRAPHIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**05.10.2011 Bulletin 2011/40**

(73) Proprietor: **TomTom North America Inc.**
**Lebanon, NH 03766-1445 (US)**

(72) Inventors:
• **WINBERRY, Mark**
**Hanover,**
**03755 New Hampshire (US)**

• **ANGWIN, George Truen**
**Hartford, Vermont 05088-0741 (US)**

(74) Representative: **Siem, Max Yoe Shé et al**
**TomTom International B.V.**
**De Ruyterkade 154**
**1011 AC Amsterdam (NL)**

(56) References cited:
**WO-A-2008/019882     US-A1- 2004 064 245**
**US-A1- 2007 032 946**

**Description**

FIELD

The present disclosure generally relates to processing information related to a geographic region.

BACKGROUND

This section provides background information related to the present disclosure which is not necessarily prior art.

Navigation devices were traditionally utilized mainly in the areas of vehicle use, such as on cars, motorcycles, trucks, boats, etc. Alternatively, if such navigation devices were portable, they were further transferable between vehicles and/or useable outside the vehicle, for foot travel for example. Navigation devices are typically tailored to produce a route of travel from an initial position and a selected/input travel destination based on a map database stored in memory of the particular navigation device. Accordingly, it is desirable to have updated map databases available to the navigation devices to ensure accurate and accessible routes planned between the initial position and the selected/input travel destination.

The document WO 2008/019882 A describes a map improvement scheme in which a user probe vehicle can send a request for changing a map database to a server when data collected on board of the probe vehicle that relates to a map element or an attribute of a map element and that differs from corresponding data stored in the map database. The server categories the reported difference in levels of trustworthiness based on the source of the probe data or on the number of times this difference has been reported.

SUMMARY

According to an aspect of the present application, there is provided a method of processing information related a geographic region as claimed in claim 1.

According to another aspect of the present application, there is provided a system for processing information related to a geographic region as claimed in claim 11.

According to another aspect of the present application, there is provided a computer readable medium as claimed in claim 10.

Advantages of these aspects are set out hereafter, and further details and features of each of these aspects are defined in the accompanying dependent claims and elsewhere in the following detailed description of various example embodiments.

DRAWINGS

The drawings described herein are for illustrative purposes only of selected embodiments and not all possible implementations, and are not intended to limit the scope of the present application.

Fig. 1 is a schematic illustration of a Global Positioning System (GPS);
Fig. 2 is a schematic illustration of electronic components arranged to provide a navigation device;
Fig. 3 is a schematic illustration of the manner in which a navigation device may receive information over a wireless communication channel;
Fig. 4 is a diagram of a map database representing a geographic region;
Fig. 5 is a diagram of a probe data map;
Fig. 6 is a block diagram of a method for generating a conflated map based on a map database and probe data according to one example embodiment of the present application;
Fig. 7 is a schematic view of a conflated map generated from the map database illustrated in Fig. 4 and the probe data map illustrated in Fig. 5; and
Fig. 8 is a diagram of a geographic region with a change request.

Corresponding reference numerals indicate corresponding parts throughout the several views of the drawings.

DETAILED DESCRIPTION

Example embodiments will now be described more fully with reference to the accompanying drawings. Example embodiments of the present invention will now be described with particular reference to a portable navigation device (PND). It should be remembered, however, that the teachings of the present application are not limited to PNDs but are instead universally applicable to any type of processing device that may be configured to execute navigation software so as to provide route planning and navigation functionality. It follows therefore that in the context of the present application, a navigation device is intended to include (without limitation) any type of route planning and position determination device, irrespective of whether that device is embodied as a PND, a navigation device built into a vehicle, or indeed a computing resource (such as a desktop or portable personal computer (PC), mobile telephone or portable digital assistant (PDA)) executing route planning and navigation software.

It will also be apparent from the following that the teachings of the present invention even have utility in circumstances where a user is not seeking instructions on how to navigate from one point to another, but merely wishes to be provided with a view of a given location. In such circumstances the "destination" location selected by the user need not have a corresponding start location from which the user wishes to start navigating, and as a consequence references herein to the "destination" location or indeed to a "destination" view should not be interpreted to mean that the generation of a route is essential, that traveling to the "destination" must occur, or indeed that the presence of a destination requires the designation of a corresponding start location.

It should be noted that the teachings of the present invention produce an improved map database which has many applications beyond those related to navigation devices. For example, there are many Internet applications for maps and many Geographic Information Systems (GIS) that use maps in applications ranging from business planning to insurance to transportation management.

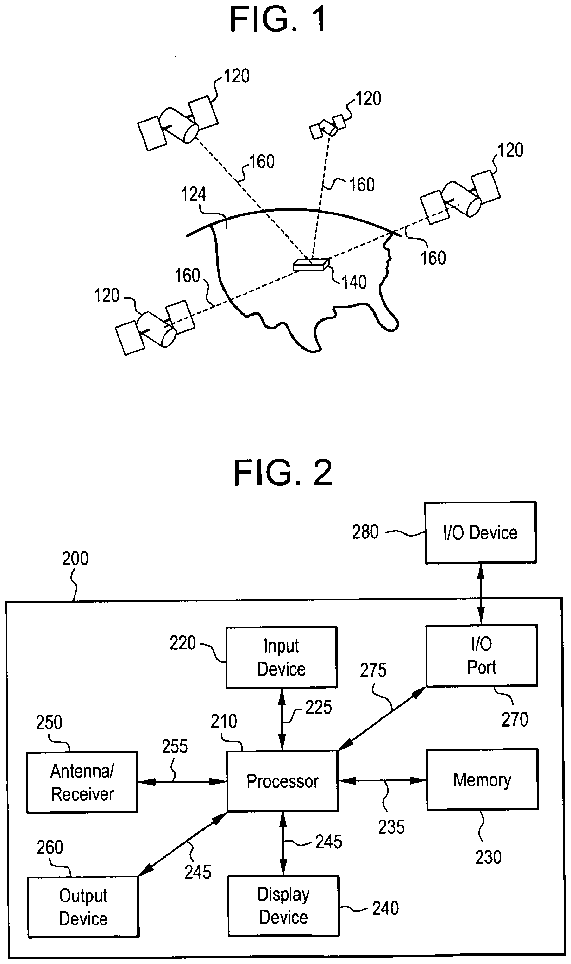

With the above provisos in mind, Fig. 1 illustrates an example view of Global Positioning System (GPS), usable by navigation devices. Such systems are known and are used for a variety of purposes. In general, GPS is a satellite-radio based navigation system capable of determining continuous position, velocity, time, and in some instances direction information for an unlimited number of users. Formerly known as NAVSTAR, the GPS incorporates a plurality of satellites which orbit the earth in extremely precise orbits. Based on these precise orbits, GPS satellites can relay their location to any number of receiving units.

The GPS system is implemented when a device, specially equipped to receive GPS data, begins scanning radio frequencies for GPS satellite signals. Upon receiving a radio signal from a GPS satellite, the device determines the precise location of that satellite via one of a plurality of different conventional methods. The device will continue scanning, in most instances, for signals until it has acquired at least three different satellite signals (noting that position is not normally, but can be determined, with only two signals using other triangulation techniques). Implementing geometric triangulation, the receiver utilizes the three known positions to determine its own two-dimensional position relative to the satellites. This can be done in a known manner. Additionally, acquiring a fourth satellite signal will allow the receiving device to calculate its three dimensional position by the same geometrical calculation in a known manner. The position and velocity data can be updated in real time on a continuous basis by an unlimited number of users.

As shown in Figure 1, the GPS system is denoted generally by reference numeral 100. A plurality of satellites 120 are in orbit about the earth 124. The orbit of each satellite 120 is not necessarily synchronous with the orbits of other satellites 120 and, in fact, is likely asynchronous. A GPS receiver 140 is shown receiving spread spectrum GPS satellite signals 160 from the various satellites 120.

The spread spectrum signals 160, continuously transmitted from each satellite 120, utilize a highly accurate frequency standard accomplished with an extremely accurate atomic clock. Each satellite 120, as part of its data signal transmission 160, transmits a data stream indicative of that particular satellite 120. It is appreciated by those skilled in the relevant art that the GPS receiver device 140 generally acquires spread spectrum GPS satellite signals 160 from at least three satellites 120 for the GPS receiver device 140 to calculate its two-dimensional position by triangulation. Acquisition of an additional signal, resulting in signals 160 from a total of four satellites 120, permits the GPS receiver device 140 to calculate its three-dimensional position in a known manner. Modern navigation systems may augment or replace satellite signals with other sensors on board such as heading, distance, acceleration or receive other terrestrial based signals such as cell phone signals or electronic signposts of various sorts.

Figure 2 is an illustrative representation of electronic components of a navigation device 200 according to an example embodiment of the present invention, in block component format. It should be noted that the block diagram of the navigation device 200 is not inclusive of all components of the navigation device, but is only representative of many example components.

The navigation device 200 is located within a housing (not shown). The housing includes a processor 210 connected to an input device 220 and a display screen 240. The input device 220 can include a keyboard device, voice input device, touch panel and/or any other known input device utilized to input information; and the display screen 240 can include any type of display screen such as an LCD display, for example. In an example arrangement the input device 220 and display screen 240 are integrated into an integrated input and display device, including a touchpad or touch screen input so that a user need only touch a portion of the display screen 240 to select one of a plurality of display choices or to activate one of a plurality of virtual buttons.

The navigation device may include an output device 260, for example an audible output device (*e.g.*, a loudspeaker, etc.). As output device 260 can produce audible information for a user of the navigation device 200, it is should equally be understood that input device 240 can include a microphone and software for receiving input voice commands as well.

In the navigation device 200, processor 210 is operatively connected to and set to receive input information from input device 220 via a connection 225, and operatively connected to at least one of display screen 240 and output device 260, via output connections 245, to output information thereto. Further, the processor 210 is operably coupled to a memory resource 230 via connection 235 and is further adapted to receive/send information from/to input/output (I/O) ports 270 via connection 275, wherein the I/O port 270 is connectible to an I/O device 280 external to the navigation device 200. The memory resource 230 comprises, for example, a volatile memory, such as a Random Access Memory (RAM) and a non-volatile memory, for example a digital memory, such as a flash memory. The external I/O device 280 may include, but is not limited to an external listening device such as an earpiece for example. The connection to I/O device 280 can further be a wired or wireless connection to any other external device such as a car stereo unit for hands-free operation and/or for voice activated operation for example, for connection to an ear piece or head phones, and/or for connection to a mobile phone for example, wherein the mobile phone connection may be used to establish a data connection between the navigation device 200 and the Internet or any other network for example, and/or to establish a connection to a server via the Internet or some other network for example.

Fig. 2 further illustrates an operative connection between the processor 210 and an antenna/receiver 250 via connection 255, wherein the antenna/receiver 250 can be a GPS antenna/receiver for example. It will be understood that the antenna and receiver designated by reference numeral 250 are combined schematically for illustration, but that the antenna and receiver may be separately located components, and that the antenna may be a GPS patch antenna or helical antenna for example.

Further, it will be understood by one of ordinary skill in the art that the electronic components shown in Fig. 2 are powered by power sources (not shown) in a conventional manner. As will be understood by one of ordinary skill in the art, different configurations of the components shown in Fig. 2 are considered to be within the scope of the present application. For example, the components shown in Fig. 2 may be in communication with one another via wired and/or wireless connections and the like. Thus, the scope of the navigation device 200 of the present application includes a portable or handheld navigation device 200.

In addition, the portable or handheld navigation device 200 of Fig. 2 can be connected or "docked" in a known manner to a vehicle such as a bicycle, a motorbike, a car or a boat for example. Such a navigation device 200 is then removable from the docked location for portable or handheld navigation use.

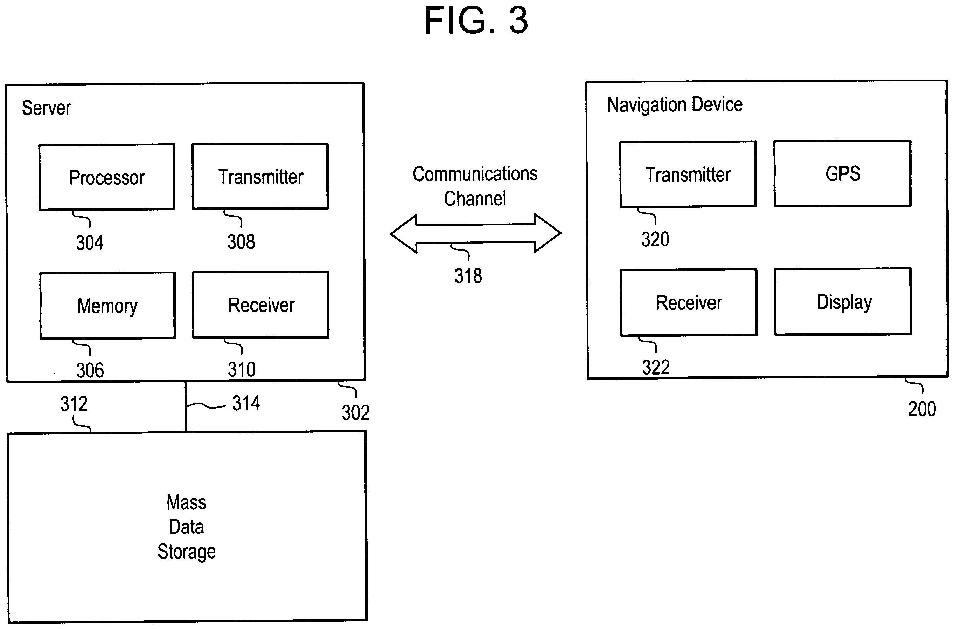

Referring now to Fig. 3, the navigation device 200 may establish a "mobile" or telecommunications network connection with a server 302 via a mobile device (not shown) (such as a mobile phone, PDA, and/or any device with mobile phone technology) establishing a digital connection (such as a digital connection via known Bluetooth technology for example). Thereafter, through its network service provider, the mobile device can establish a network connection (through the Internet for example) with a server 302. As such, a "mobile" network connection is established between the navigation device 200 (which can be, and often times is mobile as it travels alone and/or in a vehicle) and the server 302 to provide a "real-time" or at least very "up to date" gateway for information.

The establishing of the network connection between the mobile device (via a service provider) and another device such as the server 302, using an internet (such as the World Wide Web) for example, can be done in a known manner. This can include use of TCP/IP layered protocol for example. The mobile device can utilize any number of communication standards such as CDMA, GSM, WAN, etc.

As such, an Internet connection may be utilized, which is achieved via data connection, via a mobile phone or mobile phone technology within the navigation device 200 for example. For this connection, an internet connection between the server 302 and the navigation device 200 is established. This can be done, for example, through a mobile phone or other mobile device and a GPRS (General Packet Radio Service)-connection (GPRS connection is a high-speed data connection for mobile devices provided by telecom operators; GPRS is a method to connect to the Internet).

The navigation device 200 can further complete a data connection with the mobile device, and eventually with the Internet and server 302, via existing Bluetooth technology for example, in a known manner, wherein the data protocol can utilize any number of standards, such as the GSRM, the Data Protocol Standard for the GSM standard, for example.

The navigation device 200 may include its own mobile phone technology within the navigation device 200 itself (including an antenna for example, or optionally using the internal antenna of the navigation device 200). The mobile phone technology within the navigation device 200 can include internal components as specified above, and/or can include an insertable card (e.g. Subscriber Identity Module or SIM card), complete with necessary mobile phone technology and/or an antenna for example. As such, mobile phone technology within the navigation device 200 can similarly establish a network connection between the navigation device 200 and the server 302, via the Internet for example, in a manner similar to that of any mobile device.

For GRPS phone settings, a Bluetooth enabled navigation device may be used to correctly work with the ever changing spectrum of mobile phone models, manufacturers, etc., model/manufacturer specific settings may be stored on the navigation device 200 for example. The data stored for this information can be updated.

In Fig. 3, the navigation device 200 is depicted as being in communication with the server 302 via a generic communications channel 318 that can be implemented by any of a number of different arrangements. The server 302 and a navigation device 200 can communicate when a connection via communications channel 318 is established between the server 302 and the navigation device 200 (noting that such a connection can be a data connection via mobile device, a direct connection via personal computer via the internet, etc.).

The server 302 includes, in addition to other components which may not be illustrated, a processor 304 operatively connected to a memory 306 and further operatively connected, via a wired or wireless connection 314, to a mass data storage device 312. The processor 304 is further operatively connected to transmitter 308 and receiver 310, to transmit and send information to and from navigation device 200 via communications channel 318. The signals sent and received may include data, communication, and/or other propagated signals. The transmitter 308 and receiver 310 may be selected or designed according to the communications requirement and communication technology used in the communication design for the navigation system 200. Further, it should be noted that the functions of transmitter 308 and receiver 310 may be combined into a signal transceiver.

Server 302 is further connected to (or includes) a mass storage device 312, noting that the mass storage device 312 may be coupled to the server 302 via communication link 314. The mass storage device 312 contains a store of navigation data and map information, and can again be a separate device from the server 302 or can be incorporated into the server 302.

The navigation device 200 is adapted to communicate with the server 302 through communications channel 318, and includes processor, memory, etc. as previously described with regard to Fig. 2, as well as transmitter 320 and receiver 322 to send and receive signals and/or data through the communications channel 318, noting that these devices can further be used to communicate with devices other than server 302. Further, the transmitter 320 and receiver 322 are selected or designed according to communication requirements and communication technology used in the communication design for the navigation device 200 and the functions of the transmitter 320 and receiver 322 may be combined into a single transceiver.

Software stored in server memory 306 provides instructions for the processor 304 and allows the server 302 to provide services to the navigation device 200. One service provided by the server 302 involves processing requests from the navigation device 200 and transmitting navigation data from the mass data storage 312 to the navigation device 200. Another service provided by the server 302 includes processing the navigation data using various algorithms for a desired application and sending the results of these calculations to the navigation device 200.

The communication channel 318 generically represents the propagating medium or path that connects the navigation device 200 and the server 302. Both the server 302 and navigation device 200 include a transmitter for transmitting data through the communication channel and a receiver for receiving data that has been transmitted through the communication channel.

The communication channel 318 is not limited to a particular communication technology. Additionally, the communication channel 318 is not limited to a single communication technology; that is, the channel 318 may include several communication links that use a variety of technology. For example, the communication channel 318 can be adapted to provide a path for electrical, optical, and/or electromagnetic communications, etc. As such, the communication channel 318 includes, but is not limited to, one or a combination of the following: electric circuits, electrical conductors such as wires and coaxial cables, fiber optic cables, converters, radio-frequency (RF) waves, the atmosphere, empty space, etc. Furthermore, the communication channel 318 can include intermediate devices such as routers, repeaters, buffers, transmitters, and receivers, for example.

In one illustrative arrangement, the communication channel 318 includes telephone and computer networks. Furthermore, the communication channel 318 may be capable of accommodating wireless communication such as radio frequency, microwave frequency, infrared communication, etc. Additionally, the communication channel 318 can accommodate satellite communication.

The communication signals transmitted through the communication channel 318 include, but are not limited to, signals as may be required or desired for given communication technology. For example, the signals may be adapted to be used in cellular communication technology such as Time Division Multiple Access (TDMA), Frequency Division Multiple Access (FDMA), Code Division Multiple Access (CDMA), Global System for Mobile Communications (GSM), etc. Both digital and analogue signals can be transmitted through the communication channel 318. These signals may be modulated, encrypted and/or compressed signals as may be desirable for the communication technology.

The server 302 includes a remote server accessible by the navigation device 200 via a wireless channel. The server 302 may include a network server located on a local area network (LAN), wide area network (WAN), virtual private network (VPN), etc.

The server 302 may include a personal computer such as a desktop or laptop computer, and the communication channel 318 may be a cable connected between the personal computer and the navigation device 200. Alternatively, a personal computer may be connected between the navigation device 200 and the server 302 to establish an internet connection between the server 302 and the navigation device 200. Alternatively, a mobile telephone or other handheld device may establish a wireless connection to the internet, for connecting the navigation device 200 to the server 302 via the Internet.

The navigation device 200 may be provided with information from the server 302 via information downloads which may be periodically updated automatically or upon a user connecting navigation device 200 to the server 302 and/or may be more dynamic upon a more constant or frequent connection being made between the server 302 and navigation device 200 via a wireless mobile connection device and TCP/IP connection for example. For many dynamic calculations, the processor 304 in the server 302 may be used to handle the bulk of the processing needs, however, processor 210 of navigation device 200 can also handle much processing and calculation, oftentimes independent of a connection to a server 302.

As indicated above in Fig. 2, a navigation device 200 includes a processor 210, an input device 220, and a display screen 240. The input device 220 and display screen 240 may be integrated into an integrated input and display device to enable both input of information (via direct input, menu selection, etc.) and display of information through a touch panel screen, for example. Such a screen may be a touch input LCD screen, for example, as is well known to those of ordinary skill in the art. Further, the navigation device 200 can also include any additional input device 220 and/or any additional output device 260, such as audio input/output devices for example.

According to the present invention, a method of processing information related a geographic region includes determining a probability that at least one difference between a map database and a geographic region represented by the map database is valid based on probe data from the geographic region and at least one change request and storing the probability and the at least one difference in memory. The at least one change request is associated with the at least one difference. Further, according to the present invention, a system for processing information related to a geographic region includes a processor configured to determine a probability that at least one difference between a map database and a geographic region represented by the map database is valid based on probe data from the geographic region and at least one change request and memory operable coupled to the processor to store the probability and the at least one difference. The change request is associated with the at least one difference.

According to the present invention, a computer software includes one or more software modules operable, when executed in an execution environment, to cause a processor to determine a probability that at least one difference between a map database and a geographic region represented by the map database is valid based on probe data from the geographic region and at least one change request and store the probability and the at least one difference in a memory. The change request is associated with the at least one difference.

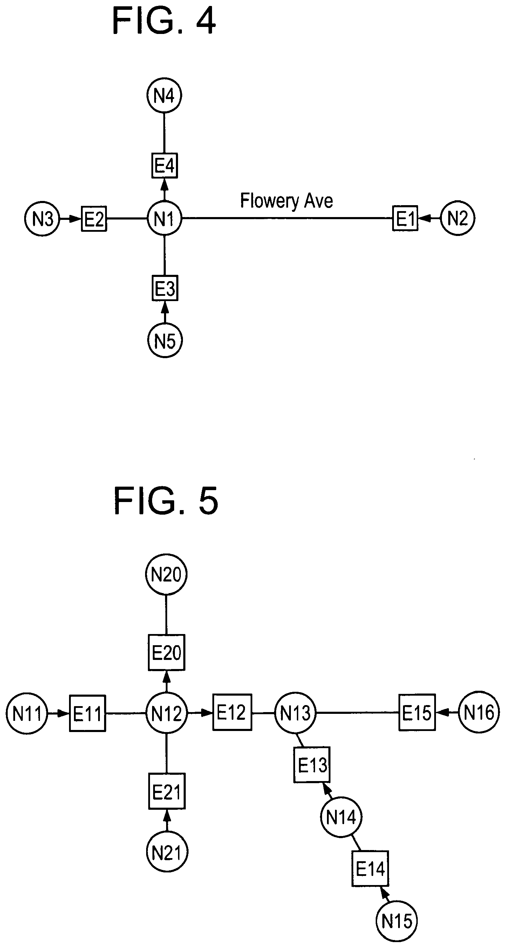

Referring to Fig. 4, a section of a map database is illustrated. The map database represents a geographic region. The map database includes a street, i.e., Flowery Avenue, disposed between node N1 and node N2. The map database may be, for example, a master map database maintained by one or more developers at a central facility. One or more versions of the master map database may be released to various navigation devices, e.g., the navigation device 200, etc., to be used in planning routes from an initial location to a desired destination.

Fig. 5 illustrates a probe data map generated from probe data. In at least one example embodiment, the probe data may be collected continuously from one or more navigation devices 200. When collecting probe data, a navigation device 200 may continuously be stored in memory 230 probe trails and associated attributes. The probe trails generally include multiple pieces of probe data having a location and time stamp, e.g., Edge E1 at 12:00:00; [Day] [Month] [Year]. In other examples of the present application, the multiple pieces of probe data may include coordinates, i.e., a latitude/longitude, and a time stamp. The pieces of probe data are strung together into probe trails, e.g., bread-crumb trails, etc., illustrating the travel of a navigation device 200 from one location to another. In at least one example, the probe data may include multiple probe trails grouped by an

identifier, such as an object, e.g., edge, node, bounded area, etc. For example, 10 probe trails related to the object identifier node N32 may be grouped together.

Tracking the movement of the navigation device 200 may be useable in identifying new geometries, travel restrictions (e.g., no left turn, no u-turn, timed restrictions, timed access, stop signs, stop lights, yield signs, speed limits, paper roads, road for official use only, etc.), closed roads, overpasses, number of lanes, traffic lanes, etc. by comparison to a map database. In the present disclosure, one or more change requests are used in conjunction with the probe data to facilitate more efficient, faster, and/or more reliable identification of one or more differences between the probe data, e.g., a probe data map, etc., and a map database, e.g., a master map database, etc. The change request associated with the difference may include, for example, an error message input by a user of a navigation device 200, an update request, and/or a change lead, etc.

A change request and the probe data is employed to determine a probability that a difference between a map database and a geographic region represented by the map database is valid. A change request and probe data is employed to update a map database to include at least one difference between the map database and a geographic region represented by the map database. A difference is identified from one of a change request and probe data. Once the difference is identified, the other of the change request and the probe data is employed in one or more methods consistent with the present application to determine a probability that the difference is valid, update a map database to include said difference, etc.

In some embodiments, a change request may be associated with an object defined by a map database. For example, an object may be a primitive object, such as an edge, a node, a bounded area, etc. In another example, multiple primitive objects may be constructed into an object, such as a bridge, address points, etc. It should be appreciated that in various example embodiments of the present application, an object may be a primitive object, an object constructed from multiple primitive objects, and/or a combination thereof. In one example, a change request may include an error message indicating that a street, represented by an edge E1 between two nodes, has become a oneway street. The error message may be associated with the edge. In this manner, the error message may be processed to probe data related to the same edge. For example, probe data for edge E1 may indicate that a plurality of navigation devices 200 have been traveling along edge E1 in only one direction. Since the edge E1 is indicated as a two-way street in the map database, a difference can be identified from one or both of the probe data and the
error message. Further, a probability of the difference being valid may be calculated based on the probe data and the error message.

Based on the probability that a difference between a map database and a geographic region represented by the map database is valid, the method includes updating the map database and storing the updated map database in memory. The memory may be included in the system 302, e.g., memory 306 and/or memory 312 (mass data storage) situated remotely and connectable to the system 302 through wired or wireless connection 314. In some embodiments, based on the probability that a difference is valid exceeds an update threshold, a map database may be updated automatically. An update threshold may include a probability of about 95%. In other embodiments of the present application, other suitable probabilities, e.g., about 80%, about 90%, about 98%, about 99%, etc., may be employed as an update threshold. In still other embodiments, one or more map developers may review a difference, including the probe data and/or one or more change requests, before the map database is updated to include the difference.

In other embodiments, a change request may be associated with a position within the map database and/or a conflated map (described below). For example, a position may be latitude and longitude, received from a map application, which operates based on latitude and longitude. In this manner, a change request may include an error message (from a navigation device running such a map application) at latitude and longitude. Similar to the description above, the error message and probe data for that latitude and longitude may be grouped together based on the position. In at least one embodiment, when a change request and/or probe data is associated with a position, a method may include identifying an object, as defined by the map database and/or a conflated map, coextensive with the position included in the change request and/or probe data. For example, a change request may be defined by the map database at 46.642089 degrees latitude and -72.246688 degrees longitude. A node N42 is present at 46.642089 degrees latitude and -72.246688 degrees longitude. Accordingly, an object identifier - node N42 - may be included in the change request. The object identifier in the change request may be employed for comparing and/or grouping the change request to/with other change requests and/or probe data.

It should further be appreciated that in some embodiments, an object within a predetermined distance from a position (or an object) may be identified. For example, a change request may be defined by the map database at 46.642091 degrees latitude and -72.246685 degrees longitude. Similarly, a node N42 is present at 46.642089 degrees latitude and -72.246688 degrees longitude. These two locations are within 2 meters
of each other and so may be considered, in some embodiments, to be substantially the same position: the node N42 may be within a predetermined distance such that the position may be referring to the object. Accordingly, the object - node N42 - may be included in the change request. In some example embodiments, a predetermined distance may be selected based on the accuracy of the latitude and longitude and/or other suitable factors. Examples of predetermined distances may be 1 meters, 2 meters, 20 meters, etc., and other predetermined distances may be employed in still other embodiments of the present application.

In various other embodiments, probe data may be in the form of a probe data map, e.g., as shown in Fig. 5, etc. As shown, the probe data map illustrated in Fig. 5 represents the same geographic region as represented by the map database in Fig. 4. A portion of the probe data from which the probe data map of Fig. 5 is constructed may be summarized and associated with features in a conflated map. Table 1 illustrates one way to summarize probe data information on vehicle movement along edge E12 of Figure 5.

TABLE 1

| edge | source type | direction of travel | count | earliest time stamp | latest time stamp |
|------|-------------|---------------------|-------|---------------------|-------------------|
| E12 | in-vehicle | positive | 982 | 13:26:57 17 Mar [year] | 17:59:23 22 Sep [year] |
| E12 | in-vehicle | negative | 888 | 08:56:01 19 Mar [year] | 11:07:33 22 Sep [year] |
| E12 | portable | positive | 363 | 13:26:57 17 Mar [year] | 18:05:50 22 Sep [year] |

(continued)

| edge | source type | direction of travel | count | earliest time stamp | latest time stamp |
|------|-------------|---------------------|-------|---------------------|-------------------|
| E12 | portable | negative | 342 | 08:56:01 19 Mar [year] | 11:07:33 22 Sep [year] |

The entries included for edge E12 have an orientation indicator. The table indicates that the probe data includes, for in-vehicle navigation devices, 982 probe trails in the positive direction along edge E12 and 888 probe trails along edge E12 in the negative direction. Further, for portable navigation devices, the probe data includes 363 probe trail in the positive direction along edge E12 and 342 probe trails along edge E12 in the negative direction. The in-vehicle and portable designations define a probe data source. The probe data source may be an in-vehicle navigation device, a portable navigation device, or other suitable probe data gathering device, etc. The source of the probe data may be a factor in determining validity associated with the particular probe data. Each of the pieces of probe data further includes a time stamp from when the probe data was captured. The time stamps enable the pieces of probe data to be constructed into probe trails, indicating the route of travel of the navigation device 200. Table 1 includes a time stamp column, which includes the earliest and latest time stamps from the pieces of probe data represented in the row for travel along the edge E12. In other embodiments, one or more time stamps may include more or less information.

It should be appreciated that further information and/or attributes about an object may be included in the probe data. For example, probe data may include speed, type of vehicle, if it is on a route or deviated from it, state of map matching, detail regarding the source of the data, circumstances under which probe data was collected, altitude, photos and/or radar/laser sensor outputs, etc. While probe data may be summarized as shown in Tables 1 and 2, in various other embodiments, the probe data may be summarized into other types of tables, indicating other types of information.

The probe data may also contain information on how one or more vehicles move through an intersection. For example, Table 2 illustrates one way to summarize probe data information on vehicle movement through node N12 of Figure 5.

TABLE 2

| node | from edge | to edge | source type | transition count | earliest time stamp | latest time stamp |
|------|-----------|---------|-------------|------------------|---------------------|-------------------|
| N12 | E12 | E20 | in-vehicle | 96 | 13:26:57 18 Mar [year] | 17:25:12 22 Sep [year] |
| N12 | E12 | E11 | in-vehicle | 187 | 14:13:34 17 Mar [year] | 18:05:50 22 Sep [year] |
| N12 | E20 | E12 | in-vehicle | 67 | 08:56:01 19 Mar [year] | 17:59:23 22 Sep [year] |
| N12 | E11 | E12 | in-vehicle | 201 | 12:12:46 19 Mar [year] | 11:07:33 22 Sep [year] |

Each row in Table 2 shows a transition count, the number of probe trails traveling from one edge to another, both incident to the same node; for example, edge E12 and edge E20 are both incident to node N12 and the first row of Table 2 shows the number of probe trails that moved through from edge E12 to edge E20 through node N12. Table 2 further includes time stamps for the earliest and latest time stamp of the probe trails summarized therein. Further, the transition counts may be divided between in-vehicle probe data and portable probe data.

A more detailed way of summarizing probe data is illustrated by Tables 3 and 4. As shown, Table 3 shows a row for each combination of probe trail, edge, source type, and direction of travel. Time stamps are also included for the probe data included therein. The rows of Table 3 show records for probe trail X144 along the sequence edge E15, edge E12, and edge E20. The navigation device 200, which gathers the probe data, entered edge E15 at 13:26:23 on March 17th and exited edge E15 at 13:26:41 on March 17th, after which it entered edge E20 at 13:26:42. The detail included in the probe data summary shown in Table 3 may be employed to make more precise determinations of the significance of the probe data, as compared to the summary in Table 1. The specific level of detail included in a summary of probe data may depend on several factors specific to the particular embodiment of the present application.

TABLE 3

| probe trail | edge | source type | direction of travel | earliest time stamp | latest time stamp |
|-------------|------|-------------|---------------------|---------------------|-------------------|
| X144 | E15 | in-vehicle | positive | 13:26:23 17 Mar [year] | 13:26:41 17 Mar [year] |
| X144 | E12 | in-vehicle | negative | 13:26:42 17 Mar [year] | 13:26:56 17 Mar [year] |
| X144 | E20 | in-vehicle | positive | 13:26:57 17 Mar [year] | 13:27:05 17 Mar [year] |

Table 4 illustrates one way to summarize probe data information on the movement of vehicles through an intersection. For each transition of a probe trail through a node, Table 4 includes a row containing the node identifier, the identifier of the edge from which the probe trail entered the node and the identifier of the edge from which the probe trail exited the node. The source type and time stamp at the node are also included therein.

TABLE 4

| probe trail | node | from edge | to edge | source type | time stamp |
|---|---|---|---|---|---|
| X144 | N13 | E15 | E12 | in-vehicle | 13:26:42 17 Mar [year] |
| X144 | N12 | E12 | E20 | in-vehicle | 13:26:57 17 Mar [year] |

In example embodiments, probe data may be provided by multiple navigation devices 200 to a system 302 through a communication channel 318. In one example embodiment, a server 302 may be coupled via a transmitter 308 and a receiver 310 to a communication channel 318, e.g., computer network, Internet, LAN, WAN, etc. A navigation device 200 may periodically connect to the communication channel 318 to provide probe data to the system 302. It should be appreciated that in other embodiments, a navigation device 200 may be consistently in communication with the system 302 through a communication channel 318. For example, a navigation device 200 may subscribe to a service to receive regular updates to a map database. In such an example, probe data may be transmitted to the system 302, before, after or simultaneously with transmissions of updated map information. It should be appreciated that in other embodiments, probe data may be received from one or multiple navigation devices 200 based on different conditions, processes, timing, etc.

Probe data may be further processed by a navigation device 200, another system 302 involved in gathering probe data, or other suitable systems, etc. For example, a service provider for navigation devices 200 may process probe data sufficient to identify one or more differences between probe data and a current version of a map database installed on one or more navigation devices 200. The differences may be provided to one or more map developers to employ methods of the present application for determining probabilities, updating map databases, etc. Additionally or alternatively, a navigation device 200 may be employed to determine one or more differences between the route of travel and a map database included therein. The navigation device 200 may forward the difference as probe data and/or transmit an error message reflecting the difference, *i.e.,* a change request, as discussed below. Further, in at least one embodiment, methods of the present application may be employed on a navigation device 200.

As shown in Figs. 4 and 5, a new geometry is present at node N13 of the probe data map. The new geometry is a difference between the map database of Fig. 4 and the probe data map of Fig. 5. In other embodiments, the difference may be identified by tabular comparison of the probe data to the map database (not generating a probe data map), comparing individual pieces of probe data to a map database to identify at least one difference, comparing multiple pieces of probe data to a map database to identify at least one difference, or one or more other suitable methods, or a combination thereof, may be employed. In at least one example embodiment, raw probe data may be compared to the map database. In another example embodiment, processed probe data may be compared to a map database. Other methods may include identifying one or more differences in a conflated map for edges and nodes brought in from the probe data map, abrupt cessation or resumption of probe trails at a node, edges that should have a high volume of traffic but having no probe data attached. These differences, for example, may be identified by one or more software applications during the conflation process.

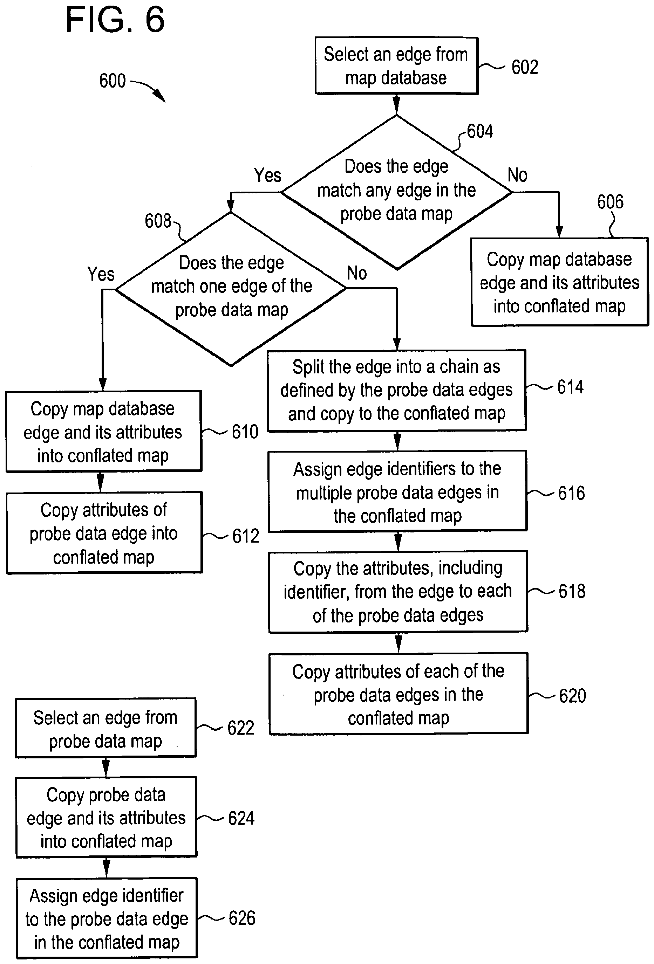

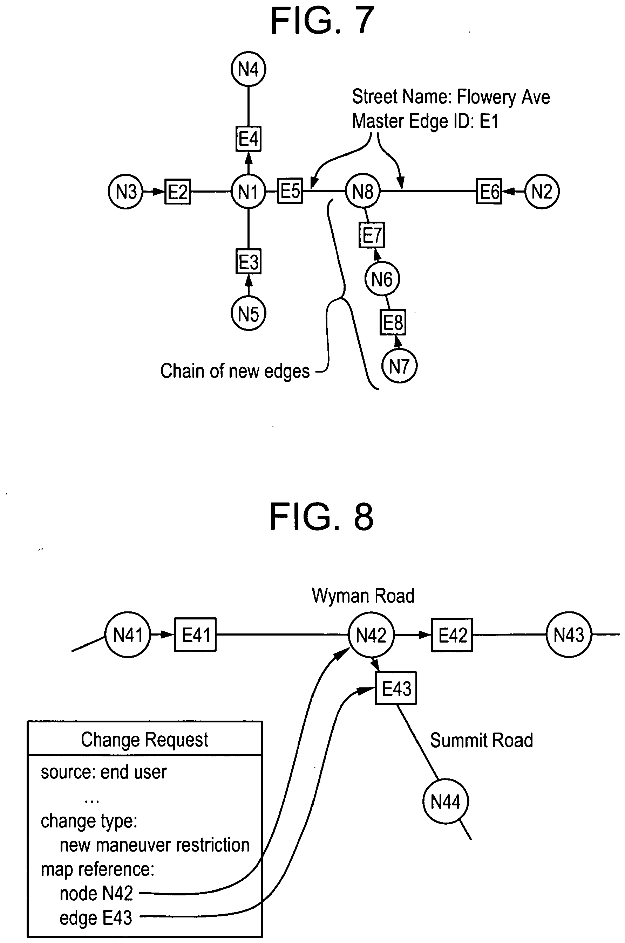

According to at least one embodiment of the present disclosure, a method for generating a conflated map is illustrated in Fig. 6. Although the application of the method 600 may be applied to various forms of map database and probe data (e.g., a probe data map, etc.), the method 600 will be disclosed herein with reference to Figs. 4 and 5. The conflated map generated by method 600 is illustrated in Fig. 7. It should also be appreciated that while in this particular embodiment, a difference is identified by generating a conflated map shown in Fig. 7, as described below, from the probe data map shown in Fig. 5, raw probe data may be employed in other embodiments to identify one or more differences between a map database and probe data.

The method 600 includes step 602 for selecting an edge from the map database and step 604 for determining if the selected edge matches any edge in the probe data map. With reference to the map database of Fig. 4, step 602 may include selecting edge E1. From step 604, the method 600 exits to step 606 or step 608. If the edge E1 had not matched any edge in the probe data map, the method 600 would exit to step 606 for copying the map database edge and its attributes into the conflated map. Since the edge E1 corresponds to an edge in the probe map data, the method 600 exits to step 608 for determining if the Edge E1 matches one edge or several edges in the probe data map.

If edge E1 had matched only one edge in the probe data map, the map database edge E1 may have been copied into the conflated map along with its attributes in step 610 and attributes associated with the edge in the probe data map may also have been copied into the conflated map in step 612. Since, however, edge E1 matches two edges, E12 and E15, from the probe data map, step 608 exits to step 614 to split the edge E1 into a chain as defined by the probe data map edges E12 and E15, subsequently copying said edges into the conflated map, as shown in Fig. 7. Step 614 exits to step 616 for assigning identifiers E5 and E6 to the edges from the probe data map. Step 618 is included for copying attributes, including the name "Flowery Ave" and the identifier, from the map database edge, onto each of the conflated map edges E5 and E6, as shown in Fig. 7. Specifically, for example, each of edges E5 and E6 includes the information "master edge ID: E1." Step 620 is also included for copying the attributes of each probe data map edge into the respective edge of the conflated map. As shown in Fig. 7, the conflated map includes new edges E5 and E6, each retaining the identifier of edge E1 as an attribute value. The process continues for edges E2, E3, and E4 until each of the edges in the map database has been selected.

Once each map database edge E1, E2, E3, and E4 has been selected according to method 600, each of the edges in the probe data map (not already considered in steps 602 through 620) is selected, as indicated in step 622. With reference to Fig. 5, the probe data map includes edges E13 and E14 which do not correspond to one or more edges in the map database. At step 622, edge E13 is selected, and the method 600 includes step 624 for copying the probe data map edge E13 and its attributes into the conflated map, as shown in Fig. 7. The edge is assigned an edge identifier E7 at step 626. The incident relations between the new edges and its bounding nodes are preserved in the conflated map. It should be appreciated that the method illustrated in Fig. 6 is not limited to the example map database, probe data map, and/or conflated map illustrated in Figs. 4, 5, and 7.

It should be appreciated that in some embodiments of the present application, the above may be applied to nodes, areas, and other objects included in the probe data and/or map database.

The generation of the conflated map may be substantially completed automatically, by a processor in an execution environment. Additionally or alternatively, one or more map developers, *e.g.*, a person associated with maintaining and/or updating a map database, etc., may be involved in one or more of the decisions of a method for generating a conflated map. For example, in at least one embodiment, one or more of the decisions blocks of method 600 (*i.e.,* step 604, step 608, etc.) may include an exit to flag an edge, a node, or other suitable object for review by one or more map developers. Further, while the method 600 may be implemented to automatically generate a conflated map, at least one other embodiment may include a method for assigning a reliability score to each match and permit one or more map developers to reviewed one or more of the matches below a threshold score. In this manner, generating a conflation map may be completed substantially automatically, while including one or more map developers to ensure accuracy for matches with a lower reliability score.

In the conflated map of Fig. 7, as compared to the map database, the difference is shown as including nodes N6, N7, and N8 plus edges E7 and E8. In this particular example, the differences of new edges copied from the probe data suggest a new street. Other visible differences may include an edge from the map database split into multiple edges suggesting a new street intersection, an edge in the map database may not correspond to a edge in the probe data suggesting a closed or non-existent street, etc.

Still other differences may be identified from the probe trails through the time stamps included therein. For example, probe trails may travel in both directions along an edge, and then travel in only one direction after a time and/or date suggesting an imposition of a one-way traffic restriction. In another example, probe trails may travel in one direction along an edge, then after a certain time and/or date travel in both directions along the edge, suggesting the removal of a one-way travel restriction. In yet another example, probe trails may travel along an edge, then cease traveling after a time and/or date that is earlier than times and/or dates of travel along nearby edges, suggesting a street closure. In a still further example, probe trails may make a turn at a node, then cease making said turn after a time and/or date, suggesting imposition of a maneuver restriction. In one example, probe trails may not turn at a node, then making said turn later than times and/or dates of travel along nearby edges, suggesting the removal of a maneuver restriction.

It should be appreciated that the above are only a number of example differences suggested by a conflated map, probe data, and/or a map database. Various other differences may be suggested or conceived from the content of a conflated map, probe data, and/or a map database in other examples of the present application.

Each difference in a conflated map may include a map reference, which includes a list of unique edge identifiers, a list of unique node identifiers, and/or a version of the map database from which the identifiers are taken. For example, the difference in Fig. 7 includes the identifier E1 derived from the map database and new edges E5 and E6 plus the version of the map data from which the conflated map was constructed, *i.e.,* the version of the map database illustrated in Fig. 4. In at least one example embodiment, one or more identifiers are taken from a map database, when the conflated map is generated. Further, in some embodiments, an identifier from a map database may be selected over an identifier from probe data map, and vice versa. One identifier may be selected over another identifier for convenience in calculating a probability of a difference being valid and/or updating the map database, etc.

Additionally, in some embodiments, each difference in the conflated map may be assigned a change type. In at least one embodiment, the change type selected from a generic list, e.g., "new street," "add maneuver restriction", etc. For example, as shown in Fig. 7, the differences are assigned a change type of "new street." Other types and methods of assigning change types may be employed in still other embodiments.

Once the difference is identified, a probability of the difference being valid may be calculated based on the probe data from which the conflated map was generated. The probability may be a function of the number of probe trails participating in the difference. For example, if a difference is based on a probe trail from one navigation device 200 in three months, the probability of the difference being valid may not be significant. On the other hand, if a difference is based on five hundred probe trails from three hundred and forty-five navigation devices 200, the probability of the difference being valid may be significant. Assignment of probability to probe data may be subjective depending on several factors, such as the type of a navigation device 200, the circumstances of a navigation devices 200 being used while collecting data, the road class and form of way of the road on which the data is collected, the time and date of collection, etc.

In some embodiments, a probability may be calculated when a number of probe trails reaches a threshold number. For example, a probability may be calculated when two hundred fifty probe trails pass through an object, e.g., an edge, a node, etc. It should be appreciated that a different number of probe trails may be included in the calculation of a probability from a conflated map. Also, additional probe data may be used to revise the probability. In other embodiments, a probability is calculated from a subset of the probe data included in the conflated map. Additionally or alternatively, the probe data included in the conflated map may be limited by one or more factors including, e.g., probe data after a time and/or date.

When updating a map database, a certain threshold probability of the difference being valid may be required. For example, a probability is to be at least about 90%, before one or more map developers evaluate the difference. As disclosed herein, a probability of a difference being valid may be based on probe data and a change request. A change request, as disclosed above, may include an error message, an update request, and/or a change lead, etc. An error message may be received from a navigation device 200 to reflect errors, based on its travel routes, in the map database included therein. For example, when a user comes to a difference between the map database and a geographic region represented by the map database, the user may provide an input to input device 220, *e.g.,* a button, touch-screen, keypad, etc., of a navigation device 200 to note an error in the map database. The error may be compiled into an error message including the error indicated by the user, any description provided from the user and/or a location of the navigation device 200 when the input was received. The error message may be transmitted via transmitter 320 immediately, or at a later time, *e.g.*, when the navigation device 200 receives an update, connects to a communication channel 318, or other suitable times, etc.

In at least one embodiment, an update request may be provided from a map developer. The update request may be based on one or more of an analysis of aerial photography, a sales contact, field data from quality testing, a local government document, etc. Update requests may be any of a number of different information sources available to a map developer or other suitable person associated with updating a map database. Additionally, a change lead is a change request constructed from information available through the Internet. The information may be government posting, maps, stream of road changes, etc. The change lead is constructed by the map developer who located the information and/or another suitable person. The change lead may include a change type, an identifier defined by the map database, a source, and/or other information specific to the change lead, e.g., the name of the new street, etc.

The type of change request may also dictate what information is included in the change request. If, for example, the change request concerns a street closure, the change request may include an identifier for each edge included therein, identifiers for adjacent and/or included nodes, etc. In at least one embodiment, a change request includes the source of the change request, the date of the change request was generated, a date when the change requested took/will take effect (if known or relevant), a position of the change, a version of the map database upon which a change request is described, a statement of the nature of the change, a change type, and/or an identifier that ties the change request to the version of the map database and/or the conflated map, etc. The identifier may be automatically provided based on a position of the change request or other information particular to the change request. Alternatively, a map developer may assign an object to the change request based on information included in the change request and/or the conflated map. Further, the identifier may be associated with an object within a predetermined distance from a position included in the change request.

It should be appreciated that more or less information may be included in a change request in other embodiments of the present application.

An example change request is illustrated in Fig. 8. An error message from a navigation device 200 indicating that a barrier existed at the end of Summit Road, where it intersects with Wyman Road. The user of the navigation device 200 interpreted the error to be associated with Summit Road which can be identified by the navigation device as edge 43, wherein is incident to node N42. From an input from a user to the navigation device 200, the navigation device 200 constructed the change request as shown. The error message includes a source being an end user, a change type being a new maneuver restriction, and map references edge E43 and node N42. The error message may be transmitted to a server 302 and/or another suitable system for processing of the change request.

Change requests may be processed individually or in groups. A change request may include an identifier, such as a object, etc., that may be used to group the change request with other change requests. In at least one example, change requests may be grouped together based on an identifier and a change type. In this manner, for example, a new street change request and new maneuver restriction change request may be kept separate, even when each includes the same identifier.

In at least one embodiment, a difference in a conflated map may be combined with one or more change requests in a group. For example, described with reference to the map database illustrated in Fig. 4, a change request may be based on an official report, e.g., generated by a local government, etc., on the Internet that claims a new cul-de-sac, Flowery Court has been added off of Flowery Ave. The change request includes edge E1 as an identifier, to which the cul-de-sac is suppose to be added and "new street" as the change type. In the conflated map, shown in Fig. 7, a difference is identified at that identifier based on the map database of Fig. 4 and the probe data map of Fig. 5, also with the change type "new street." Accordingly, the change request refers to the same "new street" as the difference in the conflated map, and thus the difference and the change request refer to the same event and may be grouped together at edge E1. Alternatively, if the change request had included the change type "new travel restriction," according to at least one embodiment, the change request is not grouped together with the difference, because the change types are different. In other embodiments, different grouping may be employed to process information related to the geographic region represented by the map database. For example, change requests may be grouped separately from differences in the conflated map. In another example, changes request and differences may be grouped together based on an identifier, regardless of the change type included.

It should be appreciated that change groups may be formed from change requests and/or differences in the conflated map. For example, a conflated map may be searched for one or more identifiers included in one or more differences. In another example, a plurality of change requests may be searched for one or more identifiers included in a difference in a conflated map. It should further be appreciated that a combination of searching based on an identifier in a conflated map or an identifier in a change request may be employed in other embodiments of the present application. In various embodiments, grouping may be based on an identifier, such as an object, etc., included in the change request and/or the difference.

Alternatively or additionally, in some embodiments of the present disclosure, a position may be used to group change requests and/or differences. Further, in other embodiments, change request and/or differences may be grouped based on a location. The location may be an object or a position and may include the predetermined distance from said position or object such that adjacent objects and/or positions are included in the grouping. In this manner, grouping may be able to overcome inaccuracies in change requests and/or differences. For example, if an end user indicates an error (thereby generating an error message in some embodiments), it may be unlikely for the error to be captured exactly at the error position, and the change request may include a position and/or an identifier adjacent to an object and/or position for which the error message was not intended. By grouping by location, the error message, if within the predetermined distance, may be able to be grouped with a difference and/or one or more other change requests. A predetermined distance may be 1 meter, 2 meters, 20 meters, etc. Other predetermined distances may be employed in other embodiments of the present application.

Moreover, each type of grouping may be completed automatically in some embodiments of the present application. In other embodiments, however, one or more map developers may be involved in a portion and/or all of grouping of change requests, probe data, and/or differences.

Whether grouped or alone, a change request may be employed to calculate a probability that a difference between a map database and a geographic region represented by the map database is valid. The probability may be a function of one or more of the type of a change request or a probe data, the source of the change request or the probe data, etc. In at least one embodiment, a probability of a difference being valid may be a product of each of the probabilities associated with a conflated map, probe data, and/or change requests, etc. Such probabilities may be derived empirically and not be related to a specific number but rather tested against a specific threshold determined by some combination of measurements and analysis.

According to one example, a difference suggesting a new street is based on two in-vehicle probe trails and three portable probe trails. In this particular example, a map developer has determined the probability of the new street not being valid for a portable navigation device 200 is 0.6 and for an in-vehicle navigation device 200 is 0.3. Then, the probability of the difference being not valid is the product of these probabilities:

$$0.3^2 \times 0.6^3 = 0.019$$

In this manner, the probability that the difference is not valid, calculated from all five of the probe trails, is about 1.9%. Therefore, the probability that the difference is valid is 98.1%. The probability associated with the number and source of probe trails may be assigned initially, and revised according to further information pertaining to the accuracy of the particular type and/or source of the probe trails. This calculation depends on the individual probe trails providing statistically independent information, *i.e.*, not duplicative information from the same navigation device 200. To account for duplicative information from a navigation device 200, *e.g.*, John Smith taking that same short cut through a parking lot every day, etc., the probabilities associated with probe trails, such as John Smith's, may be adjusted accordingly.

Similarly, a probability that a change request is not valid may also be assigned based on the kind of the change request, *e.g.*, update request, error message, change lead, etc. The probability may be assigned based on an analysis of a sample set of change requests from a particular source and/or of a particular type. The probability for each of the changes requests may be assigned and then revised as more information is available about the accuracy of the particular kind of change request.

If a group of change requests relating to the same object and including the same change type are statistically independent, the probability of the change requests being not valid is the product of the probability that each of the change requests is not valid. If, however, there is statistical dependence among some of the change requests, the change requests may be filtered to eliminate the statistical dependence, thereby providing a portion of the change request with statistical independence. For example, for three change requests for a new street, one change request is from a newspaper, carrying a probability of not being valid of 0.05, and two change requests are error messages from the same end user. Each of the error messages has a probability of not being valid of 0.4. Because the two error messages are not independent, only one is used to calculate the probability of the difference not being valid.

$$0.05 \times 0.4 = 0.02$$

The probability of the difference not being valid is 2%. Accordingly, the probability of the difference being valid is 98%. It should be appreciated that in some embodiments, probabilities may be calculated notwithstanding the statistical dependency, wherein the statistical dependence is taken into account by adjusting the probability of the individual change requests.

Combining the above, according to one embodiment of the present disclosure, a method includes calculating a probability that a difference is valid based on the difference and a change request. Considering the examples above, the probability of the difference, as derived from the probe data, not being valid is 0.019, and the probability of the difference not being valid based on the change request is 0.02. The combined probability that the difference is not valid is:

$$0.019 \times 0.02 = 0.00038$$

The probability of the change being valid, conversely, is 99.96%. It should be understood that the example disclosed above is merely illustrative. In various implementations of the present application, many more probe trails and/or change requests may be considered in calculating a probability that a difference is valid. Further, it should be appreciated that in various embodiments of the present application, probabilities are not limited to the descriptions, statistics, and/or mathematics expressed herein. A probability may include one or more of a percentage, a score, fraction, or another suitable manner of measuring the likelihood that a difference between a map database and a geographic region represented by the map database is valid. According to at least some embodiments of the present application, a probability may be based on probe data and at least one change request. In at least some embodiments, one or more probabilities may be derived from empirical conclusions based on hundreds, thousands, or more data points including probe data and/or change requests.

In some embodiments of the present disclosure, the probability calculated from the difference and the change request may be compared to one or more threshold probabilities to determine whether to update the map database, notify a map developer, etc. Specifically, for example, if an update threshold requires a probability of at least about 99.9%, the example above having a probability of the difference being valid of 99.997% satisfies the condition for update, and therefore the map information would be updated. In the example above, if the probe trail alone had been the basis for the probability, the update threshold would not be satisfied, *i.e.,* 1 - 0.019 = 98.1%. Similarly, if the change requests alone had been the basis for the probability, the update threshold would not be satisfied, *i.e.,* 1 - 0.02 = 98.0%. It should be appreciated that accurate probability numbers may be difficult to derive and the thresholds may be simply an empirical number based on measurements and the test statistic may be a number or ratio of numbers without converting them to exact probabilities.

By the combination described above, a map database may be updated more efficiently, faster, and/or with a greater degree of accuracy. As the number of change requests and amount of probe data for a difference increase, the update threshold may be satisfied more quickly or the update threshold may be increased to provide for a greater accuracy. Specifically, in one example (assuming statistical independence), probe data for a difference is gathered on one trail every three days. Each of the probe trails is for a portable navigation device 200 and having a probability of being invalid of 0.6. Accordingly, for an update threshold of 99.2%, the probe data alone could satisfy the update threshold to update the map database in 30 days ($0.06^{10}$ = 0.006047 => 1 - 0.006047 = 99.39%), see Table 5, below. Similarly, for the same difference one change request, having a 0.28 probability of being invalid, is received every six days. Alone, the change requests would satisfy the update threshold in 24 days.

TABLE 5

| Days | Probe Data | | Change Requests | | Total |
|------|--------|--------|--------|--------|---------------|
| 3 | 0.6000 | 60.00% | | | |
| 6 | 0.3600 | 64.00% | 0.2800 | 72.00% | 89.92000000% |
| 9 | 0.2160 | 78.40% | | | |
| 12 | 0.1296 | 87.04% | 0.0784 | 92.16% | 98.98393600% |
| 15 | 0.0778 | 92.22% | | | |
| 18 | 0.0467 | 95.33% | 0.0220 | 97.80% | 99.89758075% |
| 21 | 0.0280 | 97.20% | | | |
| 24 | 0.0168 | 98.32% | 0.0061 | 99.39% | 99.98967614% |
| 27 | 0.0101 | 98.99% | | | |
| 30 | 0.0060 | 99.40% | 0.0017 | 99.83% | 99.99895935% |

As shown, by calculating the probability based on the difference from the probe data and the change requests, the probability of the difference being valid reach the update threshold in 18 days. Accordingly, the map database may be updated to include the difference in just 18 days. Alternatively, an update threshold (*e.g.*, 99.2%, etc.) associated with updating a map database may be increased to provide greater accuracy in updating a map database. Specifically, in the example above, the update threshold may be increased from 99.2% to 99.9%. Because the combined probability from the probe data and the change request satisfies the new update threshold in the same amount of time as the change request alone (*i.e.,* 24 days), combining the probabilities of the probe data and the change request permits greater accuracy (99.989% as compared to 99.39%) in the same amount of time.

It should be appreciated that if the threshold probability is satisfied, the map database may be updated automatically, *e.g.*, program executable by a processor, etc., or may require some degree of map developer interaction to complete the update.

Additionally, in some embodiments, a method may include a check threshold for determining whether to notify one or more map developers. Specifically, for example, a check threshold may be 85% such that when a probability calculated based on the difference and change request, a map developer may be notified to evaluate the difference. The notification may be a simple indicator, flag, etc. inserted into processed data, a map database, a probe data map, and/or a conflated map. Additionally or alternatively, the notification may be a communication, *e.g.*, an email, etc., transmitted to one or more map developers. As described above with the update threshold, the check threshold may be adjusted based on the probability of a difference being valid and the information used in calculating the probability of the difference being valid. It should be appreciated that a number of different thresholds, *e.g.*, a wait-and-see threshold, a reject threshold, etc., may be employed in some embodiments to establish various levels of map developer involvement in updating or not-updating a map database.

Once the map is updated consistent with the disclosure above, the updated map database may be periodically processed into a product and released to navigation devices 200 or other suitable devices or is released to application providers of such devices which in turn reform the product to work within the device. The period between releases may be weeks, months, or other suitable durations based on the type of information and/or changes included in the map database, etc. In at least one embodiment, calculating a probability of a difference being valid based on the difference and at least one change request may shorten the time between releases of updated map databases, without diminishing the accuracy of the updated map database. Additionally, or alternatively, in at least one embodiment, calculating a probability of a difference being valid based on the difference and at least one change request may increase the accuracy of updated map databases, without increasing the time between releases of the updated map database. Further, in various embodiments, the updated map database may be formatted to a file size sufficient to facilitate efficient transfer to one or more navigation device 200 or other suitable devices. It should be appreciated that, in other embodiments, a map database may be further processed, compressed, formatted, and/or modified prior to distribution to one or more navigation devices or other suitable devices.

In at least one embodiment, an updated map database may be stored in memory associated with a navigation device, such as memory 230 of navigation device 200, etc. Alternatively or additional, the processed map database may be stored in a memory accessible to the navigation device 200, *e.g.*, memory 306 and/or 312, etc.

It should be appreciated that the methods described herein may be used alone or in combination depending on the particular implementation of the present application.

Appropriate software coding can readily be prepared by skilled programmers based on the teachings of the present application, as will be apparent to those skilled in the software art. Embodiments of the present application may also be implemented by the preparation of application specific integrated circuits or by interconnecting an appropriate network of conventional component circuits, as will be readily apparent to those skilled in the art.

Embodiments of the present application may include a computer program product which is a storage medium (media) having instructions stored thereon/in which can be used to program a computer to perform any of the methods of embodiments of the present application. The storage medium and/or memory can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems, including molecular memory ICs, or any type of system or device suitable for storing instructions and/or data. Further, embodiments of the present application may be implemented as a computer program product for use with a computer system, the computer program product being, for example, a series of computer instructions or program segments stored on a tangible data recording medium (computer readable medium). The series of computer instructions or program segments can constitute all or part of the functionality of the method of embodiments described above, and can also be stored, separately or in combination, in any of the various type of memory disclosed herein and/or other suitable devices.

Stored on any one of the computer readable medium (media), embodiments of the present application include software for controlling both the hardware of the general purpose/specialized computer or microprocessor, and for enabling the computer or microprocessor to interact with a human user or other mechanism utilizing the results of embodiments of the present invention. Such software may include, but is not limited to, device drivers, operating systems, and user applications. Ultimately, such computer readable media further includes software for performing embodiments of the present invention, as described above. Included in the programming or software of the general/specialized computer or microprocessor are software modules for implementing the teachings of the embodiments of present invention. Embodiments of the present application may be conveniently implemented using a conventional general purpose or a specialized digital computer or microprocessor programmed according to the teachings of the present disclosure, as will be apparent to those skilled in the computer.

The foregoing description of the embodiments of the present application has been provided for the purposes of illustration and description. It is not intended to be exhaustive or to limit embodiments of the present application to the precise forms disclosed. Many modifications and variations will be apparent to a practitioner skilled in the art. The embodiments were chosen and described in order to best explain the principles of the present application and its practical applications, thereby enabling others skilled in the art to understand the present application for various embodiments and with various modifications that are suited to the particular use contemplated.

It will also be appreciated that whilst various aspects and embodiments of the present application have heretofore been described, the scope of the present application is not limited to the particular arrangements set out herein and instead extends to encompass all arrangements, and modifications and alterations thereto, which fall within the scope of the appended claims.

For example, whilst embodiments described in the foregoing detailed description refer to GPS, it should be noted that the navigation device may utilize any kind of position sensing technology as an alternative to (or indeed in addition to) GPS. For example the navigation device may utilize using other global navigation satellite systems such as the European Galileo system. Equally, it is not limited to satellite based but could readily function using ground based beacons or any other kind of system that enables the device to determine its geographic location.

It will also be well understood by persons of ordinary skill in the art that whilst the preferred embodiment implements certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

**Claims**

1. A method of processing information related to a geographic region, the method comprising:

   determining a probability that at least one difference between a map database and a geographic region represented by the map database is valid based on probe data from the geographic region and at least one change request, the change request being associated with the at least one difference, said probe data comprising, for one or more navigation devices travelling from one location to another through the geographic region, multiple locations and time stamps that when strung together into a probe trail illustrate the travel of each navigation device;
   storing the probability and the at least one difference in memory;
   updating the map database to reflect the at least one difference when the probability exceeds an update threshold; and
   storing the updated map database in the memory.

2. The method of claim 1, wherein the probe data and the at least one change request are associated with an object defined by the map database.

3. The method of claim 1, wherein the probe data includes a probe data map, further comprising identifying the at least one difference from a conflated map generated from the map database and the probe data map, the at least one difference being associated with an object defined by at least one of the conflated map and the map database.

4. The method of claim 1, wherein at least one of the probe data and the at least one change request is associated with a position within the geographic region.

5. The method of claim 4, further comprising identifying an object defined by the map database coextensive with or within a predetermined distance from said position.

6. The method of any of claims 1-2 or 4-5, further comprising identifying the at least one difference from the at least one change request.

7. The method of any preceding claim, further comprising: receiving at least one of an error message from a navigation device and an update request; and generating the at least one change request based on the at least one of the error message and the update request.

8. The method of claim 7, wherein the at least one change request includes a change type indicated by the error message or the update request, further comprising comparing the at least one change request to the probe data to ensure the change type is consistent.

9. The method of any preceding claim, further comprising receiving the probe data from at least one navigation device, via a communication channel.

10. A computer readable medium including program segments for, when executed on a processor of a system, causing the system to implement the method of any preceding claim.

11. A system for processing information related to a geographic region, the system comprising a processor and a memory operably coupled to the processor, and wherein the processor is configured to:

   determine a probability that at least one difference between a map database and a geographic region represented by the map database is valid based on probe data from the geographic region and at least one change request, the change request being associated with the at least one difference, said probe data comprising, for one or more navigation devices travelling from one location to another through the geographic region, multiple locations and time stamps that when strung together into a probe trail illustrate the travel of each navigation device; store the probability and the at least one difference in the memory; update the map database to reflect the at least one difference when the probability exceeds an update threshold; and store the updated map database in the memory.

12. The system of claim 11, wherein the probe data and the at least one change request are associated with one of an object defined by the map database and a position within the geographic region.

13. The system of claim 11 or 12, further comprising a receiver connectable to at least one navigation device to receive the probe data from the at least one navigation device, via a communication channel.

**Patentansprüche**

1. Verfahren zum Verarbeiten von Informationen in Bezug auf eine geographische Region, wobei das Verfahren Folgendes beinhaltet:

    Bestimmen einer Wahrscheinlichkeit, dass wenigstens eine Differenz zwischen einer Kartendatenbank und einer durch die Kartendatenbank repräsentierten geographischen Region gültig ist, auf der Basis von Sondendaten von der geographischen Region und wenigstens einer Änderungsanforderung, wobei die Änderungsanforderung mit der wenigstens einen Differenz assoziiert ist, wobei die genannten Sondendaten für ein oder mehrere sich von einem Ort zu einem anderen durch die geographische Region bewegende Navigationsgeräte mehrere Orte und Zeitstempel umfassen, die, wenn sie zu einer Sondenstrecke aneinandergereiht werden, den Weg jedes Navigationsgeräts illustrieren;
    Speichern der Wahrscheinlichkeit und der wenigstens einen Differenz im Speicher;
    Aktualisieren der Kartendatenbank so, dass sie die wenigstens eine Differenz reflektiert, wenn die Wahrscheinlichkeit eine Aktualisierungsschwelle übersteigt; und
    Speichern der aktualisierten Kartendatenbank in dem Speicher.

2. Verfahren nach Anspruch 1, wobei die Sondendaten und die wenigstens eine Änderungsanforderung mit einem durch die Kartendatenbank definierten Objekt assoziiert sind.

3. Verfahren nach Anspruch 1, wobei die Sondendaten eine Sondendatenkarte beinhalten, das ferner das Identifizieren der wenigstens einen Differenz von einer anhand der Kartendatenbank und der Sondendatenkarte erzeugten verbundenen Karte beinhaltet, wobei die wenigstens eine Differenz mit einem Objekt assoziiert ist, das durch die verbundene Karte und/oder die Kartendatenbank definiert wird.

4. Verfahren nach Anspruch 1, wobei die Sondendaten und/oder die wenigstens eine Änderungsanforderung mit einer Position in der geographischen Region assoziiert ist/sind.

5. Verfahren nach Anspruch 4, das ferner das Identifizieren eines Objekts beinhaltet, das durch die Kartendatenbank coextensiv mit oder in einem vorbestimmten Abstand von der genannten Position definiert wird.

6. Verfahren nach einem der Ansprüche 1-2 oder 4-5, das ferner das Identifizieren der wenigstens einen Differenz von der wenigstens einen Änderungsanforderung beinhaltet.

7. Verfahren nach einem vorherigen Anspruch, das ferner Folgendes beinhaltet: Empfangen einer Fehlernachricht von einem Navigationsgerät und/oder einer Aktualisierungsanforderung; und Erzeugen der wenigstens einen Änderungsanforderung auf der Basis der Fehlernachricht und/oder der Aktualisierungsanforderung.

8. Verfahren nach Anspruch 7, wobei die wenigstens eine Änderungsanforderung einen durch die Fehlernachricht oder die Aktualisierungsanforderung angezeigten Änderungstyp beinhaltet, das ferner das Vergleichen der wenigstens einen Änderungsanforderung mit den Sondendaten beinhaltet, um zu gewährleisten, dass der Änderungstyp einheitlich ist.

9. Verfahren nach einem vorherigen Anspruch, das ferner das Empfangen der Sondendaten von wenigstens einem Navigationsgerät über einen Kommunikationskanal beinhaltet.

**10.** Computerlesbares Medium, das Programmsegmente beinhaltet, um zu bewirken, wenn sie auf einem Prozessor eines Systems abgearbeitet werden, dass das System das Verfahren nach einem vorherigen Anspruch ausführt.

**11.** System zum Verarbeiten von Informationen in Bezug auf eine geographische Region, wobei das System Folgendes umfasst: einen Prozessor und einen mit dem Prozessor operativ gekoppelten Speicher, wobei der Prozessor konfiguriert ist zum:

Bestimmen einer Wahrscheinlichkeit, dass wenigstens eine Differenz zwischen einer Kartendatenbank und einer durch die Kartendatenbank repräsentierten geographischen Region gültig ist, auf der Basis von Sondedaten von der geographischen Region und wenigstens einer Änderungsanforderung, wobei die Änderungsanforderung mit der wenigstens einen Differenz assoziiert ist, wobei die genannten Sondendaten für ein oder mehrere sich von einem Ort zu einem anderen durch die geographische Region bewegende Navigationsgeräte mehrere Orte und Zeitstempel umfassen, die, wenn sie zu einer Sondenstrecke aneinandergereiht werden, die den Weg jedes Navigationsgeräts illustrieren;
Speichern der Wahrscheinlichkeit und der wenigstens einen Differenz in dem Speicher;
Aktualisieren der Kartendatenbank so, dass sie die wenigstens eine Differenz reflektiert, wenn die Wahrscheinlichkeit eine Aktualisierungsschwelle übersteigt; und
Speichern der aktualisierten Kartendatenbank in dem Speicher.

**12.** System nach Anspruch 12, wobei die Sondendaten und die wenigstens eine Änderungsanforderung mit einem durch die Kartendatenbank definierten Objekt und/oder einer Position in der geographischen Region assoziiert sind.

**13.** System nach Anspruch 12 oder 13, das ferner einen Empfänger umfasst, der mit wenigstens einem Navigationsgerät verbunden werden kann, um die Sondendaten von dem wenigstens einen Navigationsgerät über einen Kommunikationskanal zu empfangen.

**Revendications**

**1.** Procédé de traitement d'informations relatives à une région géographique, le procédé comprenant les opérations consistant à :

déterminer une probabilité qu'au moins une différence entre une base de données cartographiques et une région géographique représentée par la base de données cartographiques est valide basée sur des données de capteur en provenance de la région géographique et au moins une demande de changement, la demande de changement étant associée à ladite au moins une différence, lesdites données de capteur comprenant, pour un ou plusieurs dispositifs de navigation se déplaçant à partir d'une localisation vers une autre à travers la région géographique, de multiples localisations et horodatages qui, lorsqu'ils assemblés les uns aux autres en une trace de capteur, illustrent le déplacement de chaque dispositif de navigation ;
stocker en mémoire la probabilité et ladite au moins une différence ;
mettre à jour la base de données cartographiques afin de refléter ladite au moins une différence lorsque la probabilité dépasse un seuil de mise à jour ; et
stocker la base de données cartographiques ayant été mise à jour dans la mémoire.

**2.** Procédé selon la revendication 1, les données de capteur et ladite au moins une demande de changement étant associées à un objet défini par la base de données cartographiques.

**3.** Procédé selon la revendication 1, les données de capteur incluant une carte de données de capteur, comprenant en outre l'identification de ladite au moins une différence en provenance d'une carte amalgamée générée à partir de la base de données cartographiques et de la carte de données de capteur, ladite au moins une différence étant associée à un objet défini par au moins une parmi la carte amalgamée et la base de données cartographiques.

**4.** Procédé selon la revendication 1, au moins une parmi les données de capteur et ladite demande de changement étant associée à une position au sein de la région géographique.

**5.** Procédé selon la revendication 4, comprenant en outre l'identification d'un objet défini par la base de données cartographiques en co-extension avec une distance prédéterminée, ou au sein de celle-ci, à partir de ladite position.

6. Procédé selon l'une quelconque des revendications 1 à 2 ou 4 à 5, comprenant en outre l'identification de ladite au moins une différence à partir de ladite au moins une demande de changement.

7. Procédé selon l'une quelconque des revendications précédentes, comprenant en outre les opérations consistant à : recevoir au moins un message d'erreur en provenance d'un dispositif de navigation et une demande de mise à jour ; et générer ladite au moins une demande de changement sur la base dudit au moins un élément parmi le message d'erreur et la demande de mise à jour.

8. Procédé selon la revendication 7, ladite au moins une demande de changement incluant un type de changement indiqué par le message d'erreur ou la demande de changement, comprenant en outre la comparaison de ladite au moins une demande de changement aux données de capteur pour s'assurer que le type de changement soit cohérent.

9. Procédé selon l'une quelconque des revendications précédentes, comprenant en outre la réception des données de capteur à partir dudit au moins un dispositif de navigation, via un canal de communication.

10. Support lisible par ordinateur incluant des segments de programme pour, lorsqu'ils sont exécutés sur un processeur d'un système, amener le système à mettre en oeuvre le procédé selon l'une quelconque des revendications précédentes.

11. Système destiné à traiter des informations relatives à une région géographique, le système comprenant un processeur et une mémoire couplée de manière fonctionnelle au processeur, et le processeur étant configuré de façon à :

déterminer une probabilité qu'au moins une différence entre une base de données cartographiques et une région géographique représentée par la base de données cartographiques est valide basée sur des données de capteur en provenance de la région géographique et au moins une demande de changement, la demande de changement étant associée à ladite au moins une différence, lesdites données de capteur comprenant, pour un ou plusieurs dispositifs de navigation se déplaçant à partir d'une localisation vers une autre à travers la région géographique, de multiples localisations et horodatages qui, lorsqu'ils assemblés les uns aux autres en une trace de capteur, illustrent le déplacement de chaque dispositif de navigation ;
stocker la probabilité et ladite au moins une différence dans la mémoire ;
mettre à jour la base de données cartographiques afin de refléter ladite au moins une différence lorsque la probabilité dépasse un seuil de mise à jour ; et
stocker la base de données cartographiques ayant été mise à jour dans la mémoire.

12. Système selon la revendication 12, les données de capteur et ladite au moins une demande de changement étant associées à un élément parmi un objet défini par la base de données cartographiques et une position au sein de la région géographique.

13. Système selon la revendication 12 ou 13, comprenant en outre un récepteur apte à être connecté à au moins un dispositif de navigation afin recevoir les données de capteur à partir dudit au moins un dispositif de navigation, via un canal de communication.

# FIG. 1

# FIG. 2

# FIG. 3

Server (302)
- Processor (304)
- Transmitter (308)
- Memory (306)
- Receiver (310)
- 312
- 314

Mass Data Storage

Communications Channel (318)

Navigation Device (200)
- Transmitter (320)
- GPS
- Receiver (322)
- Display

EP 2 370 785 B1

# FIG. 4

# FIG. 5

# FIG. 6

600

Select an edge from map database — 602

Does the edge match any edge in the probe data map — 604

Yes

No

Does the edge match one edge of the probe data map — 608

Yes

No

Copy map database edge and its attributes into conflated map — 606

Copy map database edge and its attributes into conflated map — 610

Copy attributes of probe data edge into conflated map — 612

Split the edge into a chain as defined by the probe data edges and copy to the conflated map — 614

Assign edge identifiers to the multiple probe data edges in the conflated map — 616

Copy the attributes, including identifier, from the edge to each of the probe data edges — 618

Copy attributes of each of the probe data edges in the conflated map — 620

Select an edge from probe data map — 622

Copy probe data edge and its attributes into conflated map — 624

Assign edge identifier to the probe data edge in the conflated map — 626

# FIG. 7

N4

E4

Street Name: Flowery Ave
Master Edge ID: E1

N3 → E2 → N1 → E5 → N8 → E6 ← N2

E3

E7

N5

N6

Chain of new edges

E8

N7

# FIG. 8

Wyman Road

N41 → E41 → N42 → E42 → N43

E43

Summit Road

| Change Request |
|---|
| source: end user |
| ... |
| change type: |
|    new maneuver restriction |
| map reference: |
|    node N42 |
|    edge E43 |

N44

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008019882 A